Europäisches Patentamt

European Patent Office

Office européen des brevets

(11) Numéro de publication : **0 008 964**
**B1**

(12) **FASCICULE DE BREVET EUROPÉEN**

(45) Date de publication du fascicule du brevet :
22.09.82

(51) Int. Cl.³ : **B 29 C 17/07, B 60 K 15/02**

(21) Numéro de dépôt : 79400529.8

(22) Date de dépôt : 24.07.79
**Le dossier contient des informations techniques présentées postérieurement au dépôt de la demande et
ne figurant pas dans le présent fascicule.**

(54) Procédé d'obtention d'un corps creux monobloc par soufflage et corps creux obtenu.

(30) Priorité : 28.07.78 FR 7822359
04.04.79 FR 7908442
04.07.79 FR 7917327

(43) Date de publication de la demande :
19.03.80 (Bulletin 80/06)

(45) Mention de la délivrance du brevet :
22.09.82 Bulletin 82/38

(84) Etats contractants désignés :
**AT BE CH DE FR GB IT LU NL SE**

(56) Documents cités :
**DE A 1 926 231
DE A 1 930 948
DE A 1 936 964
DE B 1 253 445
FR A 1 473 149
FR A 2 201 961
FR A 2 338 783
FR A 2 394 472
US A 3 061 104**

(73) Titulaire : **Société de Transformation des Matières
Plastiques
Zone Industrielle du Point du Jour Avenue d'Angers
F-53002 Laval (FR)**

(72) Inventeur : **Heaume, Jean
54 rue de la Senelle
F-53000 Laval (FR)**

(74) Mandataire : **Eischen, Roland
Solvay & Cie Département de la Propriété Industrielle
Rue de Ransbeek 310
B-1120 Bruxelles (BE)**

EP 0 008 964 B1

Imprimerie Jouve, 18, rue St-Denis, 75001 Paris, France

Procédé d'obtention d'un corps creux monobloc par soufflage et corps creux obtenu

L'invention se rapporte à un procédé d'obtention d'un corps creux monobloc réalisé par l'expansion d'une paraison de matière thermoplastique selon un procédé de soufflage (par exemple : extrusion-soufflage ou injection-soufflage), ledit corps étant pouvu d'une pièce additive sur l'une de ses parois intérieures.

Pour de nombreuses applications, il est nécessaire de disposer d'une pièce additive à l'intérieur d'un corps creux et ayant une fonction, soit qui lui est propre, soit devant constituer un point d'attachement et de liaison à ladite paroi, d'un organe rapporté.

Quand le corps creux est formé à partir de deux coquilles ou deux éléments complémentaires assemblés (comme c'est le cas pour les réservoirs métalliques emboutis ou les réservoirs en matière moulée par injection), il est aisé de procéder à la mise en place d'une pièce additive constituant la partie saillante désirée, et de la fixer à l'intérieur d'une des coquilles avant l'assemblage de fermeture.

Il ne peut en être ainsi dans le cas de réservoirs réalisés en une seule pièce, par exemple, par expansion d'une paraison creuse en matière thermoplastique ramollie, pour autant que les dimensions de la pièce additive ne permettent pas son introduction à l'intérieur du corps creux par un de ces orifices naturels.

On a déjà proposé, dans ce cas (par exemple dans la demande allemande 1 930 948 ou n° 1 317 649) de placer la pièce additive dans le moule avant soufflage, en la tenant espacée des parois de la paraison, au moyen d'un support ou mandrin rétractable. Il reste, alors, à procéder, pendant ou après soufflage, à la fixation de cette pièce additive, à la paroi intérieure.

Dans les cas connus précités cette fixation s'effectue en utilisant un trou percé au travers de cette paroi ou le trou laissé par le retrait du mandrin, ou encore en déformant ladite paroi de manière à enserrer la pièce.

Or, très souvent, le corps creux est destiné à servir de réservoir qui, par fonction, doit être étanche. Nul ne peut se porter garant de l'étanchéité réalisée autour de la fixation de la pièce passée au travers de la paroi, pas plus que d'une obturation du trou laissé par le mandrin.

Ce risque est inadmissible, « à fortiori » lorsque le réservoir est celui devant contenir un corps liquide inflammable.

L'invention apporte des solutions satisfaisantes au problème de la fixation d'une pièce additive à l'intérieur d'un corps creux réalisé en une seule pièce par expansion d'une paraison creuse en matière thermoplastique ramollie par application d'un procédé de soufflage même si ce corps creux est un réservoir, puisque aucun perçage de la paroi n'est nécessaire.

Ces solutions s'inspirent toutes, du principe connu du soufflage de la paraison alors que la pièce additive est maintenue entre les coquilles du moule, mais se particularise par le fait que son support ne laisse aucune trace dans la paroi du corps creux.

Selon l'invention, l'extrémité de ce support opposée à celle portant la pièce additive se termine par un insert, préalablement réalisé en un matériau thermoplastique dont la nature est identique ou compatible avec celle du corps creux, pour qu'après surmoulage de cet insert par la paroi de ce dernier il y ait une cohésion intermoléculaire des matériaux, telle que paroi et insert fassent bloc.

D'autres particularités et avantages apparaîtront à la lecture de la description et des revendications qui vont suivre, lesquelles sont faites en regard des dessins annexés sur lesquels :

les figures 1 et 2 représentent, à titre d'exemple, une pièce additive respectivement en élévation et plan,

la figure 3 montre la phase préliminaire au soufflage après introduction de la pièce additive à l'intérieur du moule de soufflage, selon un premier mode de réalisation, tandis que

la figure 4 se rapporte à la phase ultérieure au soufflage,

la figure 5 représente un corps creux dont le fond est muni d'une telle pièce, pendant la période de soudage,

les figures 6 et 7 correspondent aux phases avant et après soufflage selon un second mode de réalisation,

les figures 8 et 9 se rapportent aux mêmes phases selon un troisième mode de réalisation,

les figures 10 et 11 représentent, respectivement, en élévation et plan, une pièce additive destinée à être clipsée,

la figure 12 illustre cet assemblage par clipsage,

la figure 13 montre un autre mode de fixation basé sur la rétention magnétique.

A titre d'exemple descriptif, il a été choisi le cas de la fixation d'une pièce additive PJ devant constituer un « piège » pour carburant dans un réservoir R. Cette pièce additive comporte une semelle PS sur laquelle font saillies les cloisons PC.

Selon une première forme d'application du procédé, objet des présentes, la pièce additive PJ préétablie est placée à l'extrémité libre Tla d'une tige rigide TI, elle-même préalablement réalisée et dont la seconde extrémité est solidaire d'un insert TIb. Commodément, la pièce additive PJ est percée d'un trou central PO destiné à être enfilé sur l'extrémité Tla.

L'insert TIb peut, soit faire partie intégrante de la tige TI, soit être pourvu d'un emmanchement provisoire de cette tige.

S'il fait corps avec la tige, celle-ci restera présente après soufflage ; dans le cas contraire, elle pourra être enlevée sitôt sa fonction de support terminée.

Quelle que soit la solution choisie, la matière constituant cet insert Tlb est de même nature que celle du corps creux ou, tout au moins, d'une nature compatible avec cette dernière pour qu'après surmoulage il y ait une véritable cohésion intermoléculaire.

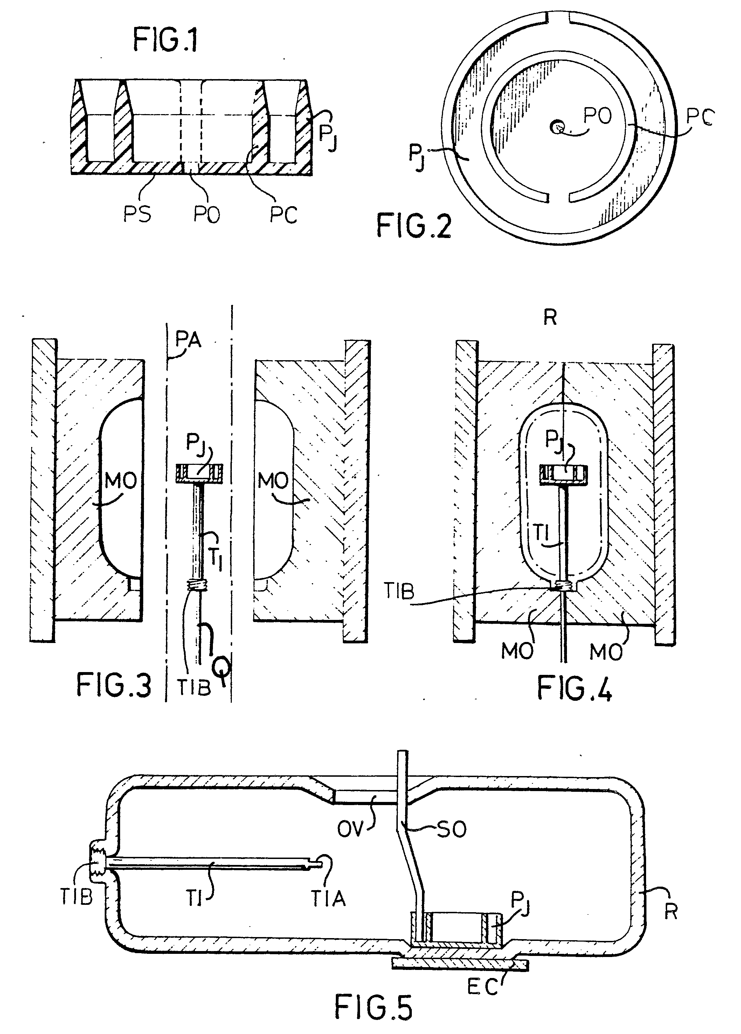

L'insert Tlb est prolongé par une queue Q qui sert à sa fixation par rapport aux coquilles du moule MO afin de permettre le centrage de la tige TI et de la pièce PJ, à l'intérieur de la paraison creuse PA (figure 3).

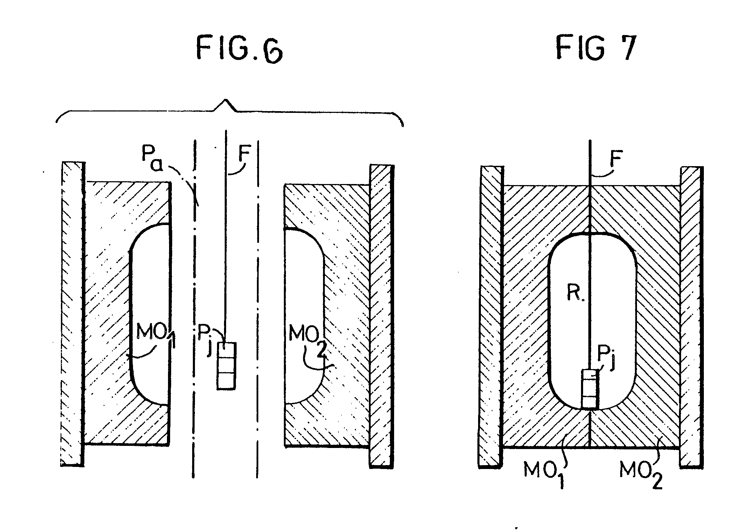

Comme on le voit sur les figures 4 et 5, après soufflage, l'insert Tlb fait bloc avec la paroi du réservoir R.

Selon une variante de cette forme de réalisation du procédé, la pièce additive PJ est suspendue à un fil F passant au travers d'une encoche des coquilles MO1 et MO2.

Ce fil est en matière thermoplastique, de même nature que celle du corps creux ou tout au moins d'une nature compatible avec cette dernière pour que, après surmoulage, il y ait entre fil et corps creux une véritable cohésion moléculaire se traduisant par une continuité absolue et sans défaut de la paroi en cause.

Selon une variante de cette dernière forme de réalisation, la pièce additive PJ est solidaire de deux fils F1 et F2 tendus et passant dans des encoches des coquilles MO1 et MO2.

Comme dans le cas précédent et en vue des mêmes résultats, ces fils sont en une matière thermoplastique de même nature que celle du corps creux ou tout au moins d'une nature compatible avec cette dernière pour que, après surmoulage, il y ait une véritable cohésion intermoléculaire entre fils et parois.

Bien entendu, on peut envisager d'utiliser plusieurs fils disposés en haubans.

Après soufflage, on libère de ce ou de ces fils supports la pièce additive PJ pour la fixer à la paroi intérieure R.

Quel que soit le mode de support de la pièce additive avant soufflage, il y a lieu d'assurer sa fixation après soufflage.

Divers moyens peuvent être envisagés, mais tous ont un point commun : ils ne nécessitent aucun perçage de la paroi contre laquelle la pièce additive doit être fixée.

Il peut y avoir collage, soudure à haute fréquence, soudure par ultra-sons, clipsage, fixation magnétique.

Pour réaliser ces types de fixation, on introduit un outil par un des orifices naturels OV. du corps creux, de manière que son extrémité travaillante vienne appliquer contre la pièce additive PJ en sa position de fixation.

Sur la figure 5, on voit l'outil (ici une sonotrode SO) pressant la pièce PJ contre la paroi, de l'autre côté de laquelle se trouve l'enclume EC.

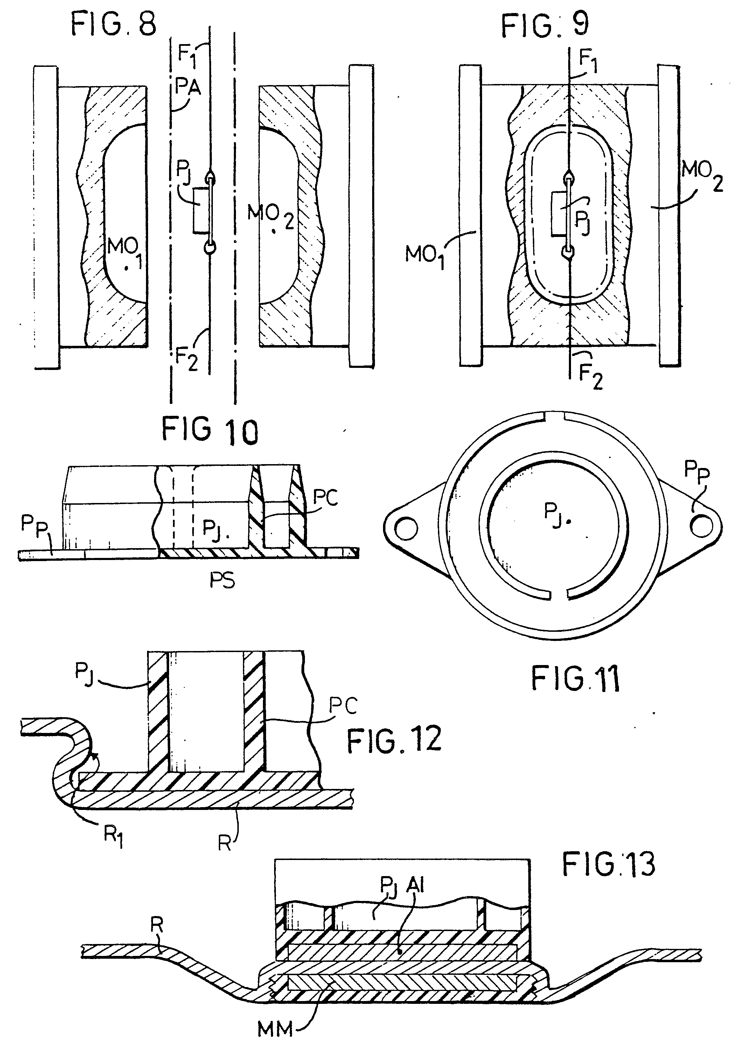

Si la pièce additive PJ est pourvue de pattes telles que PP (fig. 10 et fig. 11), ou d'une plate-bande périphérique, elle peut être clipsée par poussée par un outil, entré par un orifice naturel, dans un logement R1 obtenu par déformation de la paroi du corps creux (fig. 12).

Enfin, si l'on noie dans cette paroi une pièce magnétique MM à la manière d'un insert extérieur, on peut assurer la fixation de PJ par simple aimantation, si la pièce PJ est solidaire d'un aimant Al. Bien entendu, l'aimant peut être placé à l'extérieur de la paroi et la pièce magnétique à l'intérieur, ce qui serait le cas selon lequel la pièce additive est totalement en fer.

L'invention s'applique plus particulièrement à l'obtention de réservoir de carburant pour véhicule comportant comme pièce additive un piège comme décrit précédemment.

Il apparaît que le matériau qui répond le mieux à la possibilité d'une cohésion intermoléculaire entre la paroi et l'insert est un polyoléfine.

## Revendications

1. Procédé de fabrication d'un corps creux en un seule pièce (R) comportant au moins un orifice naturel (OV) et une pièce additive intérieure (PJ) dont les dimensions ne permettent son passage à travers aucun des orifices naturels, ledit corps étant réalisé par l'expansion obtenue par soufflage d'une paraison (PA) de matière thermoplastique dans un moule de formage composé de deux coquilles (MO), procédé dans lequel, avant la fermeture du moule, la pièce additive (PJ) est placée à une extrémité libre d'un support (TI) et introduite à l'intérieur de la paraison (PA) de manière à rester écartée des parois de celle-ci, ladite pièce étant ensuite fixée sur une portion continue intérieure de la paroi du corps creux (R) caractérisé en ce qu'on munit une autre extrémité du support (TI) d'un insert (TIB) en matériau thermoplastique de nature appropriée, en ce qu'on réchauffe ledit insert pour qu'il se fonde dans la paroi du corps creux (R) qu'il traverse et en ce qu'après le soufflage, on fixe la pièce additive (PJ) à la face interne de la paroi du corps creux à l'aide d'un outil introduit dans le corps creux par un orifice naturel (OV).

2. Procédé selon la revendication 1, caractérisé en ce que l'on fixe la pièce additive (PJ) sur la face interne de la paroi du corps creux (R) par soudage au moyen d'une électrode ou sonotrode (SO) introduite par l'un des orifices naturels (OV) du corps creux (R).

3. Procédé selon la revendication 1, caractérisé en ce que l'on fixe la pièce additive (PJ) sur la face interne de la paroi du corps creux (R) par un moyen mécanique tel qu'un clipsage, l'organe de pression effectuant cette fixation étant introduit par l'un des orifices naturels (OV) du corps creux (R).

4. Procédé selon la revendication 1, caractérisé en ce que l'on fixe la pièce additive (PJ) sur la face interne de la paroi du corps creux (R) par aimantation au travers de cette paroi, ladite pièce (PJ) comportant soit un aimant (Al) soit une pièce en un matériau magnétique qui coopère soit avec une pièce magnétique (MM) soit avec un aimant fixé extérieurement à la paroi du corps creux (R).

5. Réservoir pour liquide, et notamment pour hydrocarbures, utilisable sur un véhicule et constitué d'un corps creux réalisé en une seule pièce selon le procédé faisant l'objet d'une quelconque des revendications 1 à 4, caractérisé en ce que la pièce additive (PJ) est constituée d'une semelle (PS) et d'un chicanage (PC) formant piège pour le liquide.

6. Réservoir selon la revendication 5, caractérisé en ce que le matériau constitutif du corps creux (R) et de l'insert (TIB) est une polyoléfine.

**Claims**

1. A process for the manufacture of a hollow body, in a single piece (R), possessing at least one natural orifice (OV) and an additional internal piece (PJ), whose size does not allow it to pass through any of the natural orifices, the said body being produced by the expansion resulting from blowing a parison (PA) of thermoplastic in a mould consisting of two shells (MO), in which process, before closing the mould, the additional piece (PJ) is placed at one free end of a support (TI) and introduced into the parison (PA) in such a way as to remain remote from the walls of the latter, the said piece being subsequently fixed to an internal continuous portion of the wall of the hollow body (R), characterised in that another end of the support (TI) is provided with an insert (TIB) made of a thermoplastic of appropriate nature, that the said insert is heated so that it fuses into the wall of the hollow body (R) through which it passes and that, after blowing, the additional piece (PJ) is fixed to the internal face of the wall of the hollow body by means of a tool introduced into the hollow body through a natural orifice (OV).

2. Process according to Claim 1, characterised in that the additional piece (PJ) is fixed to the internal face of the wall of the hollow body (R) by welding by means of an electrode or sonotrode (SO) introduced through one of the natural orifices (OV) of the hollow body (R).

3. Process according to Claim 1, characterised in that the additional piece (PJ) is fixed to the internal face of the wall of the hollow body (R) by mechanical means such as clipping, the pressure device which effects this fixing being introduced through one of the natural orifices (OV) of the hollow body (R).

4. Process according to Claim 1, characterised in that the additional piece (PJ) is fixed to the internal face of the wall of the hollow body (R) by magnetic force across this wall, the said piece (PJ) possessing either a magnet (AI) or a piece made of a magnetic material which cooperates either with a magnetic piece (MM) or with a magnet fixed on the outside of the wall of the hollow body (R).

5. A reservoir for a liquid, and especially for hydrocarbons, which can be used on a vehicle and consists of a hollow body made of a single piece according to the process which forms the subject of any one of Claims 1 to 4, characterised in that the additional piece (PJ) consists of a base portion (PS) and a set of baffles (PC) forming a trap for the liquid.

6. A reservoir according to Claim 5, characterised in that the material constituting the hollow body (R) and the insert (TIB) is a polyolefine.

**Ansprüche**

1. Verfahren zur Herstellung eines einstückigen Hohlkörpers (R) mit mindestens einer natürlichen Öffnung (OV) und einem zusätzlichen Innenstück (PJ), dessen Abmessungen keine Durchführung durch irgendeine natürliche Öffnung gestatten, welcher Hohlkörper im Wege der Blasexpansion eines Formlings (PA) aus thermoplastischem Kunststoff in einem aus zwei Kokillen (MO) bestehenden Formgesenk hergestellt wird, bei welchem Verfahren vor dem Schließen der Form das zusätzliche Stück (PJ) an einem freien Ende eines Trägers (TI) angeordnet und in das Innere des Formlings (PA) eingeführt wird, dies derart, daß es sich im Abstand von dessen Wänden befindet, und anschließend das zusätzliche Stück an einem durchgehenden Innenabschnitt der Wand des Hohlkörpers (R) befestigt wird, dadurch gekennzeichnet, daß ein anderes Ende des Trägers (TI) mit einem Einsatz (TIB) aus thermoplastischem Kunststoff geeigneter Art ausgestattet wird, daß dieser Einsatz erhitzt wird, damit er sich in der Wand des Hohlkörpers (R), die er durchdringt, festsetzt, und daß nach dem Blasen das zusätzliche Stück (PJ) an der Innenseite der Wand des Hohlkörpers mittels eines in den Hohlkörper durch eine natürliche Öffnung (OV) hindurchgeführten Werkzeugs befestigt wird.

2. Verfahren nach Anspruch 1, dadurch gekennzeichnet, daß das zusätzliche Stück (PJ) auf der Innenseite der Wand des Hohlkörpers (R) durch Verschweißen mittels einer durch eine der natürlichen Öffnungen (OV) des Hohlkörpers (R) eingeführten Elektrode oder Sonotrode (SO) befestigt wird.

3. Verfahren nach Anspruch 1, dadurch gekennzeichnet, daß das zusätzliche Stück (PJ) auf der Innenseite der Wand des Hohlkörpers (R) in mechanischer Weise, beispielsweise durch Verklipsen, befestigt wird, wobei das diese Befestigung bewirkende Druckorgan durch eine der natürlichen Öffnungen (OV) des Hohlkörpers (R) eingeführt wird.

4. Verfahren nach Anspruch 1, dadurch gekennzeichnet, daß das zusätzliche Stück (PJ) auf der Innenseite der Wand des Hohlkörpers (R) durch Magnetisieren quer durch diese Wand hindurch befestigt wird, wobei das zusätzliche Stück (PJ) einen Magnet (AI) oder ein Stück aus einem magnetischen Material enthält, der bzw. das mit einem magnetischen Stück (MM) bzw. einem Magnet zusammenarbeitet, das bzw. der außenseitig an der Wand des Hohlkörpers (R) befestigt ist.

5. Aufnahmebehälter für eine Flüssigkeit und insbesondere für Kohlenwasserstoffe, der bei einem Fahrzeug verwendbar ist und der als einstückiges Teil gemäß dem Verfahren nach einem der Ansprüche 1 bis 4 hergestellt ist, dadurch gekennzeichnet, daß das zusätzliche Teil (PJ) aus einer Platte (PS) und einer Schikaneeinrichtung (PC) besteht, die eine Falle für die Flüssigkeit bilden.

6. Behälter nach Anspruch 5, dadurch gekennzeichnet, daß das den Hohlkörper (R) und den Einsatz (TIB) bildende Material ein Polyolefin ist.

FIG.1

FIG.2

FIG.3

FIG.4

FIG.5

FIG.6

FIG 7

FIG. 8

$F_1$
PA
$P_J$
$MO_1$
$MO_2$
$F_2$

FIG. 9

$F_1$
$MO_1$
$P_J$
$MO_2$
$F_2$

FIG 10

PC
$P_P$
$P_J$
PS

FIG.11

$P_P$
$P_J$

$P_J$
PC
FIG.12
$R_1$
R

FIG.13
$P_J$ Al
R
MM